# EUROPEAN PATENT APPLICATION

(11) **EP 1 763 993 A1**
(43) Date of publication of application: **21.03.2007**
(21) Application number: 06115913.3
(22) Date of filing: 22.06.2006
(51) Int. Cl.: A01K 15/02

(54) **Pet toy**

(30) Priority: 16.09.2005 US 228095
(71) Applicant: The Kong Company LLC, Golden, CO 80403-1641 (US)
(72) Inventor: Costello, Charles P., Louisville, CO Colorado 80027 (US); Markham, Joseph P., Arvada, CO Colorado 80005 (US)
(74) Representative: Harrison Goddard Foote

(57) **Abstract**

A pet toy is provided that is especially adapted for tug-of-war play between a pet owner and animal. The pet toy includes a pair of halves or parts (12,14) with a handle (18,20) on each part. A hinge (16) interconnects the pair of parts. The hinge is configured in a shape and made of a material such that a desired amount of torque can be transmitted from one end of the pet toy to another when the pet owner and animal engage in a tug-of-war action. The handle is configured and made of material that minimizes damage to the teeth and gums of the animal's mouth, and also reduces discomfort to the hand of the pet owner. The handles are arranged substantially perpendicular to a direction of longitudinal pull which occurs in the tug-of-war action.

## Description

### FIELD OF THE INVENTION

The present invention relates to pet toys, and more particularly, to a pet toy that accommodates simultaneous grasping by a pet owner and a pet, yet minimizes potential injury to the pet's mouth.

### BACKGROUND OF THE INVENTION

There are numerous pet toys available, each with different features which dictate the intended use of the pet toy. Many toys are designed specifically to elicit a play response or play behavior from the animal. For dogs, one behavior or play pattern that is well known is a dog's interest in playing tug-of-war with the pet owner. For relatively stiff or non-flexible pet toys, the tug-of-war play between the owner and dog can result in injury to the teeth and gums of the dog, and discomfort to the hand, arm, and shoulder of the pet owner. More specifically, when the dog or pet owner twists or torques a stiff pet toy, the force of the torque/twist is transferred directly to the dog's mouth or to pet owner's hand. Particularly with a large, strong dog, the dog may be able to twist or torque the pet toy and wrench the pet toy from the owner's hand. Conversely, for a smaller or weaker dog, a torque or twist produced by the pet owner can result in injurious force transmitted to the dog's mouth. Many dogs have received broken teeth and gum lacerations caused by the force of a torque/twist occurring during the tug-of-war action. The stiff material of the toy provides inadequate cushioning for the dog's mouth.

There are many plush or soft pet toys that are available, and obviously, use of a plush pet toy for a tug-of-war tends to minimize potential damage to the mouth of the pet as well as potential injury to the pet owner. However in some circumstances, some amount of torque or twist during the tug-of-war may actually enhance the play action between the pet owner and the pet.

Accordingly, there is a need for a pet toy which can accommodate tug-of-war play between a pet owner and a pet; however, the pet toy must incorporate features that help to reduce or eliminate potential injury to the animal and discomfort for the pet owner yet maintain some torque or twist force in the interaction between the pet owner and animal.

### SUMMARY OF THE INVENTION

In accordance with the present invention, a pet toy is provided that is especially adapted for tug-of-war play between a pet owner and animal. The structure of the pet toy is characterized by two substantially symmetrical parts or halves that are interconnected by a flexible hinge or connector. Each part or halve of the toy includes a handle or grip that facilitates grasping by the pet owner as well as facilitating the bite of the animal. Preferably, each halve or part of the pet toy includes a pair of relatively rigid or stiff body members that interconnect the hinge to the respective handle/grip. Preferably, the handle/grip for each part is made of a flexible and elastomeric material that provides a cushioning effect when the animal bites down on the handle/grip. Additionally, this flexible, elastomeric material also facilitates gripping by the hand of the owner.

The hinge/connector is also preferably made of a flexible and elastomeric material, and the particular material chosen can dictate the amount of torque or twisting force transferred between the pet owner and animal. The particular shape of the hinge also determines the degree to which a torque force is transmitted between the pet owner and animal. Thus, the type of material and the particular configuration of the hinge can be chosen for desired torque transmitted during the tug-of-war action.

In use, the animal bites down on one handle/grip, and the pet owner grasps the opposite handle/grip. The pet owner and/or animal then apply a force to the pet toy thus commencing the tug of war play.

These and other features and advantages of the present invention will become apparent from a review of the foregoing figures, taken in conjunction with the detailed description.

### BRIEF DESCRIPTION OF THE DRAWINGS

Figure 1 is a perspective view of a first embodiment of the pet toy of the present invention;
Figure 2 is a plan view of the pet toy of Figure 1;
Figure 3 is a side elevation view of the pet toy of Figure 1;
Figure 4 is an end view of the pet toy;
Figure 5 is a fragmentary plan view of a second embodiment of the present invention;
Figure 6 is a fragmentary plan view of one part of the pet toy specifically illustrating one method of construction of the pet toy;
Figure 7 is a plan view of another embodiment of the present invention;
Figure 8 is a plan view of another embodiment of the present invention; and
Figure 9 is another plan view of yet another preferred embodiment of the present invention.

### DETAILED DESCRIPTION

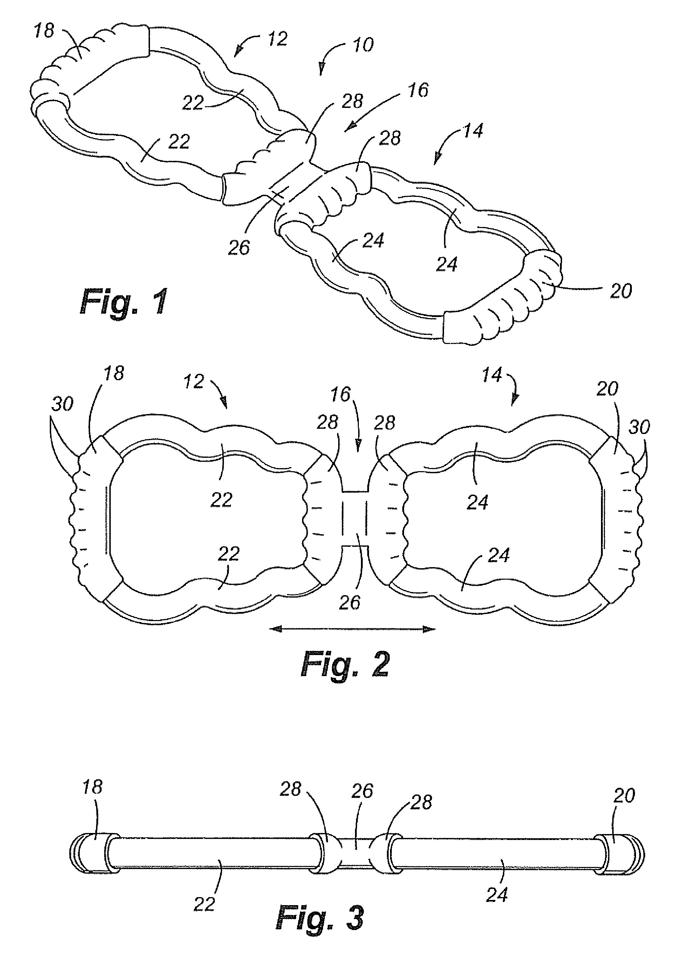

Referring to Figure 1, a first embodiment of the present invention is illustrated. The pet toy 10 includes a first half or part 12, a second half or part 14, and a hinge or connector 16 interconnecting the first and second parts. The hinge includes a pair of attachment sleeves 28 and a connecting band or element 26. The first part 12 includes a pair of body members 22 and a handle/grip 18 interconnecting opposing ends of the body members. The opposite ends of the body members are connected to one attachment sleeve 28 of the hinge 16.

The second part 14 is preferably a mirror image of the first part and accordingly includes a pair of body members 24 and a handle/grip 20 interconnecting opposing ends of the body members. The opposite ends of the body members 24 are interconnected by the other attachment sleeve 28 disposed on the opposite side of the band 26.

Preferably, the body members 22 and 24 are made of a relatively stiff and inflexible material, such as plastic. The handles 18 and 20 are preferably made of a flexible, resilient, and elastomeric material such as rubber or polyurethane. The particular material chosen for the handles is preferably one that resists puncture by the bite of an animal, yet provides adequate cushioning to help prevent tooth breakage and gum damage. The hinge/connector 16 is also preferably made of a flexible, resilient, and elastomeric material. The hinge/connector 16 could be made of the same material as the handles 18 and 20, or could be made of different material. Additionally, the size and shape of the band 26 can be designed to accommodate the amount of desired torque. A larger, thicker band 26 would transmit greater torque than a smaller, thinner band made of the same material. Different grades of rubber or thermoplastics can be chosen to accommodate the desired amount of torque.

Optionally, the handles 18 and 20 may include a plurality of protrusions or ridges 30 that assist in gripping by the pet owner as well as the animal. As shown, the ridges 30 are spaced from one another along the exposed exterior edges of the handles.

One method of making the pet toy contemplates a molding operation wherein the halves or parts are first molded so that the body members and handles are secured to one another in a first molding step. Known injection or compression molding techniques can be used to form the respective first and second parts. A second molding operation can then be performed to join the first and second parts by the hinge.

In another method of making the pet toy, the body members, handles, and hinges can each be made in separate molding operations, and then the separate pieces are assembled. The ends of the body members can be joined to the handles and sleeves by adhesive, or the ends of the body members can be inserted within respective openings of the handles and sleeves, and the pet toy would remain assembled by friction fit between the parts. The diameters of the openings of the handles and sleeves can be sized to effect the required friction fit for preventing removal of the inserted ends of the respective body members.

In yet another method of making the pet toy of the present invention, it is contemplated that each part or half of the pet toy could be a closed shaped member, that is, in lieu of a pair of body members for each half, each half would have a single, unitary and continuous body member of a closed shape. The handles in this embodiment can be in the form of sleeves that would simply slip over the body members. In a separate molding or attachment step, the hinge 16 could then be attached to the respective body members.

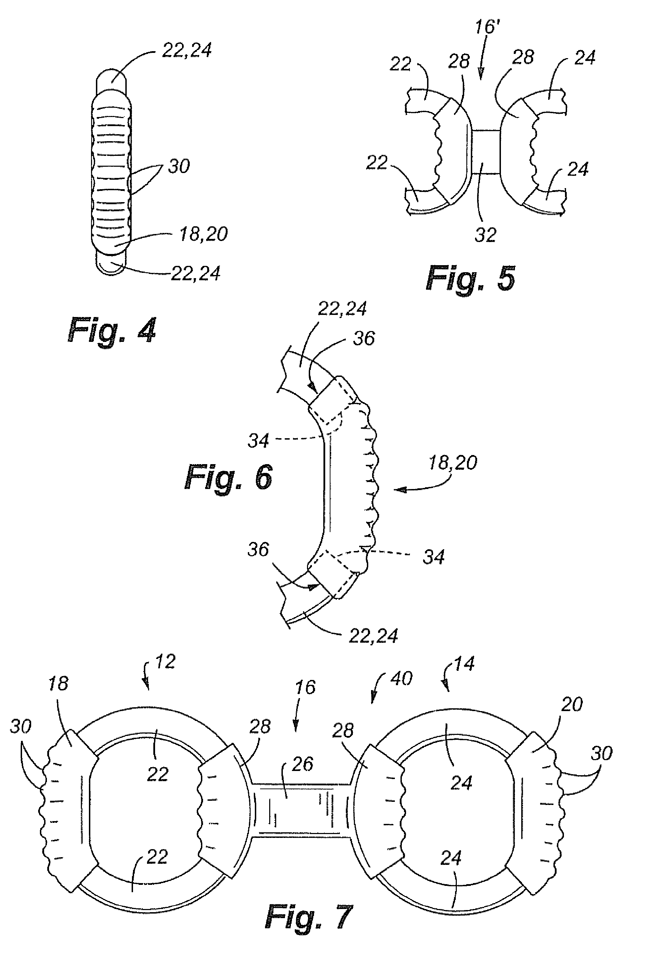

Referring to Figure 5, another embodiment of the invention is shown wherein the hinge 16 includes a band 32 that is a separate component and which is attached to the abutting faces of the respective attachment sleeves 28. Thus, the hinge 16 in Figure 5 is not integrally molded with the sleeves 28. Use of a separate component for the band may more easily accommodate modification or adjustment of desired torque. For example, while the attachment sleeves 28 can conveniently be made of the same soft and flexible material as the handles 18/20, the band 32 can be made of a different material that was less flexible and more resilient. The band 32 can be joined to the attachment sleeves 28 as by adhesive, or could be joined in a separate molding step.

Figure 6 illustrates one method of making the invention wherein a friction fit is utilized between components. More specifically, ends 34 of the body members 22/24 are inserted within respective openings 36 of the handles 18/20. The opposite ends of the body members 22 are also inserted within the respective openings of the attachment sleeves 28.

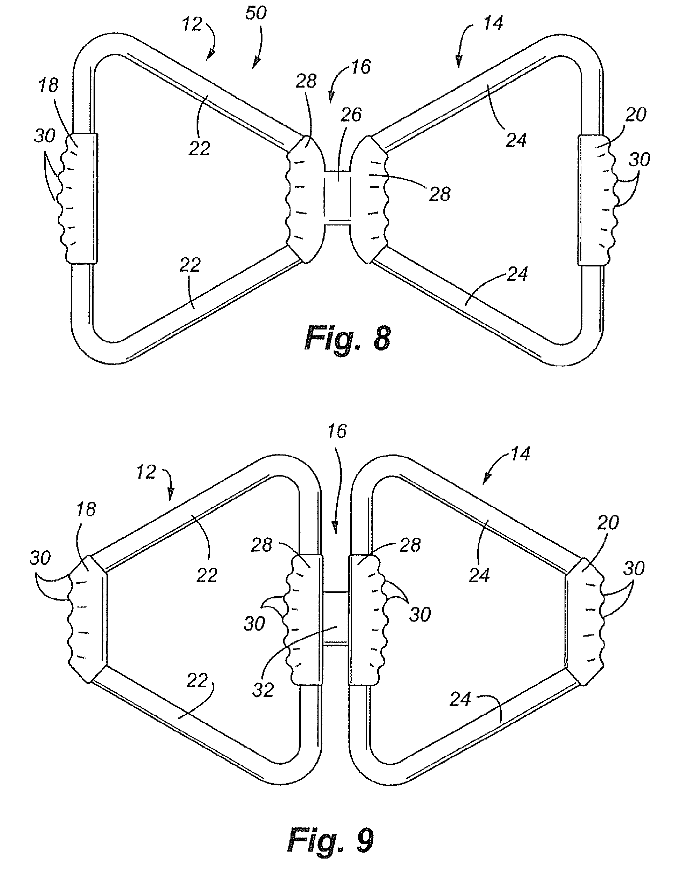

Figure 7 illustrates another embodiment of the present invention wherein the particular shape of the body members form a more circular shape. Figures 8 and 9 illustrate yet further embodiments wherein the body members form triangular shaped halves 12 and 14. Like reference numbers in these embodiments correspond to those similar structural numbers referenced in the first embodiment.

While the preferred embodiments illustrate halves or parts that are symmetrical, it is also contemplated that each half or part could have a different shape.

In use, the pet owner grabs one of the handles 18/20, and the animal bites down on the other handle 18/20. The pet owner and/or animal pulls the pet toy away from the other, and any twisting or torque force is transmitted based upon the particular material and configuration of the hinge 16.

As mentioned above, there are many advantages to the present invention. The pet toy provides two parts or halves that enable the pet toy to be conveniently grasped by the owner and held in the mouth of the animal. The part of the pet toy that contacts the pet owner's hand and the animal's mouth is cushioned to prevent injury, yet is disposed substantially perpendicular to a direction of pull which enables the pet owner and pet to maximize the pulling force. The hinge can be especially configured to transmit desired torque. The type of material as well as the shape and size of the hinge can be selected to optimize desired torque.

This invention has been described with respect to various embodiments. However, it shall be understood that various other modifications may be made within the scope of this invention as defined by the claims appended hereto.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. A pet toy comprising:
a first part having first and second ends, and a first handle attached to said second end;
a second part having first and second ends, and a second handle attached to said second end of said second part; and
an elastomeric and flexible hinge interconnecting first ends of said first and second parts.

2. A pet toy, as claimed in claim 1, wherein:
said first part includes a pair of body members spaced from one another and each having first and second ends, said handle being attached between said second ends of said pair of body members, and said first ends of said pair of body members being connected to said hinge.

3. A pet toy, as claimed in claim 1 or 2, wherein:
said hinge includes a pair of attachment sleeves, and a connecting band extending therebetween, one attachment sleeve of said pair of attachment sleeves connected to said first end of said first part, and the other of said attachment sleeves connected to said first end of said second part.

4. A pet toy, as claimed in any preceding claim, wherein:
said hinge is of unitary construction, and is made of a homogeneous material.

5. A pet toy, as claimed in claim 3, wherein:
said hinge is of non-unitary construction and said attachment sleeves being made of a first material, and said connecting band being made of a second different material.

6. A pet toy, as claimed in any preceding claim, wherein:
said hinge is made of rubber.

7. A pet toy, as claimed in claim 2 or any claim depending therefrom, wherein:
said first and second parts are made of a plastic material, and said body members being more stiff and inflexible in comparison to said hinge.

8. A pet toy, as claimed in any preceding claim, wherein:
said first and second parts are of unitary construction, and have closed shapes.

9. A pet toy comprising:
a first part having first and second ends, and a first handle attached to said second end;
a second part having first and second ends, and a second handle attached to said second end of said second part; and
means interconnecting said first ends of said first and second parts, said means for interconnecting being made of an elastomeric and flexible material, said first and second parts being more stiff and rigid in comparison to said means for interconnecting.

10. A pet toy, as claimed in claim 9, wherein:
said first part includes a pair of body members spaced from one another and each having first and second ends, said handle being attached between said second ends of said pair of body members, and said first ends of said pair of body members being connected to said means for interconnecting.

11. A pet toy, as claimed in claim 9 or 10, wherein:
said means for interconnecting includes a pair of attachment sleeves, and a connecting band extending therebetween, one attachment sleeve of said pair of attachment sleeves connected to said first end of said first part, and the other of said attachment sleeves connected to said first end of said second part.

12. A pet toy, as claimed in any one of claims 9 to 11, wherein:
said hinge is of unitary construction, and is made of a homogeneous material.

13. A pet toy, as claimed in any one of claims 9 to 12, wherein:
said means for interconnecting is of non-unitary construction and said attachment sleeves being made of a first material, and said connecting band being made of a second different material.

14. A pet toy, as claimed in any one of claims 9 to 13, wherein:
said means for interconnecting is made of rubber.

15. A pet toy, as claimed in claim 10 or any claim depending therefrom, wherein:
said first and second parts are made of a plastic material, and said body members being more stiff and inflexible in comparison to said means for interconnecting.

16. A pet toy, as claimed in any one of claims 9 to 15, wherein:
said first and second parts are of unitary construction, and have closed shapes.

17. A method of making a pet toy comprising the steps of:
molding a plurality of body members in an arrangement to produce a first part and a second part, a first handle connected to said first part, and a second handle connected to said second part; and
placing said first and second parts in said first and second handles proximate to one another, and molding a hinge to interconnect said first and second parts.
